# EUROPEAN PATENT SPECIFICATION

(11) **EP 3 970 997 B1**
(45) Date of publication and mention of the grant of the patent: **01.01.2025**
(21) Application number: 20806641.5
(22) Date of filing: 07.05.2020
(51) Int. Cl.: B60C 13/00, B60C 9/08, B60C 15/06, B60C 9/02

(54) **TIRE**
REIFEN
PNEUMATIQUE

(30) Priority: 14.05.2019 JP 2019091240
(43) Date of publication of application: 23.03.2022
(73) Proprietor: BRIDGESTONE CORPORATION, Chuo-ku Tokyo 104-8340 (JP)
(72) Inventor: HONDA Shingo, Chuo-ku, Tokyo 104-8340 (JP)
(74) Representative: Marks & Clerk LLP
(86) International application number: PCT/JP2020/018530
(87) International publication number: WO 2020/230688

(56) References cited:
- WO-A1-2008/074337
- WO-A1-2009/043377
- JP-A- 2012 148 682
- JP-A- 2013 067 183
- JP-A- 2016 107 725
- JP-A- H08 113 007
- JP-B2- 5 809 909
- JP-B2- 5 841 383
- JP-B2- 6 194 151
- US-A1- 2008 295 946
- US-A1- 2017 197 471

## Description

### [Technical Field]

The present invention relates to a tire having high cornering performance.

### [Background Art]

Conventionally, in pneumatic tire (below referred to as tire) mounted on a four-wheel vehicle, for the purpose of improving cornering performance, a structure in which a side reinforcing layer composed of a cloth rubberized with a plurality of cords is provided on tire side portion is known (refer to Patent Literature 1).

Such a side reinforcing layer is provided from an outer tire width direction end of belt layer provided inside the of tread portion of tire radial direction to an outer end of tire radial direction of bead portion. Thus, since the rigidity of tire side portion is improved, the gripping force and responsiveness during cornering of the vehicle can be improved.

JP5841383B2 discloses a pneumatic tire that includes a carcass including at least two sheets of carcass plies, a belt layer, bead apex rubber, two sheets of textile reinforcing layers, and a steel reinforcing layer, and has a flatness ratio of 50% or less. The total number of layers in the carcass plies is 2-4, the total number of layers in the textile reinforcing layers is 3-5, and the total number of layers in the steel reinforcing layer is 1-2 on a tire axial direction passing a position of 7 mm outside of the radial direction from a radial direction outermost end portion of a bead core. In a side wall portion at the tire radial direction outside of 50% of a tire cross-sectional height from a bead base line, a tire radial direction height in a rigidity relieving region where the textile reinforcing layers and the steel reinforcing layer are not provided is 10-35% of the tire cross-sectional height.

JP6194151B2 discloses a pneumatic tire that includes: a carcass having a ply constituted of a ply body and a ply folding-back part and formed by covering a ply cord with rubber; and a bead filler. The pneumatic tire also includes a first reinforcing layer formed by covering a first cord with rubber and a second reinforcing layer formed by covering a second cord with rubber, arranged in order from the inside in the tire width direction between the ply folding-back part and the bead filler, and a third reinforcing layer arranged outside in the tire width direction of the ply folding-back part and made of rubber. The first cord, the second cord and the ply cord have a tensile modulus larger in this order, and the rubber for constituting the third reinforcing layer has a 100% modulus smaller than the rubber for constituting the bead filler.

US2017197471A1 discloses a pneumatic tire includes a buttress reinforcing layer. A carcass includes a first ply and a second ply. The first ply and the second ply each have a main portion that is extended on and between beads on both sides. The buttress reinforcing layer extends along the first ply and the second ply between the first ply and the second ply. An outer end of the buttress reinforcing layer is disposed inward of a shoulder region of a tread in a radial direction. An inner end of the buttress reinforcing layer is disposed at a maximum width position of the tire or disposed outward of the maximum width position of the tire in the radial direction.

JP5809909B discloses a pneumatic tire that includes a white letter part which protrudes from white rubber arranged outward in a tire radial direction than an outer edge of a bead filler in the sidewall part and a side reinforcing layer which extends outward in the tire radial direction from a bead part. The outer peripheral edge of the side reinforcing layer is located outward in the tire radial direction relative to the inner circumferential end of the white letter part, and when a length in the tire radial direction from an inner peripheral edge of a bead core to the inner circumferential end of the white letter part is made to be H1, a length in the tire radial direction from the inner peripheral edge of the bead core to the outer peripheral edge of the side reinforcing layer is made to be H2, and a length in the tire radial direction of the white letter part is made to be T, (H2-H1)/T is set equal to or more than 0.3.

### [Citation List]

### [Patent Literature]

[Patent Literature 1] Japanese Unexamined Patent Application Publication No. 2010-274799

### [Summary of Invention]

However, with the performance improvement of the vehicle, further improvement of cornering performance, in particular, improvement of controllability in the critical condition of tire performance (gripping force, etc.) during cornering (below, referred to as controllability in critical condition) is required.

In general, by improving the axial force in the small steering angle region at the start of cornering and optimizing the shear deformation of tread portion in the large steering angle region after entering the corner, performance such as gripping force and responsiveness can be expected to be improved.

In addition, in order to improve the controllability in critical condition, it is essential to effectively function the ground contact surface of tread portion. In particular, in order to improve the axial force, it is important to promote the shear deformation of tread portion. As a method for promoting the shear deformation of tread portion, the case rigidity of tire can be increased.

However, when the case rigidity of tire is increased, the damping property of tire (flexibility of tire of tire radial direction) during cornering decreases, so that it becomes difficult to maintain the attitude of the vehicle in the state where the load is applied to tire during cornering. Therefore, the time dependency of the lateral force (Fy) is reduced.

Accordingly, an object of the present invention is to provide a tire in which the improvement of the axial force and the ease of maintaining the attitude of the vehicle during cornering can be achieved at a high level.

According to a first aspect of the invention there is provided a tire (pneumatic tire 10) including a tread portion (tread portion 20) in contacting with a road surface, a tire side portion (tire side portion 30) continuous to the tread portion and positioned inside in a tire radial direction of the tread portion, a bead portion (bead portion 60) continuous to the tire side portion and positioned inside in the tire radial direction of the tire side portion, and a carcass (carcass 40) that forms tire skeleton. The bead portion includes a bead core (bead core 61) and a bead filler (bead filler 62) provided outside in the tire radial direction of the bead core, the carcass includes a body portion (body portion 41) and a folded portion (folded portion 42) continuous to the body portion and folded back to outside in a tire width direction via the bead core, and a part of the body portion and the folded portion are formed by at least a plurality of plies (ply 41 a, ply 41 b, ply 42 a, ply 42 b). The carcass include a first reinforcing member (flipper 70) folded back from an inner side in the tire width direction via the bead core to an outer side in the tire width direction to cover the bead core and the bead filler, and a second reinforcing member (insert 80) provided between the bead filler and the first reinforcing member folded outside in the tire width direction. In at least a part of the region where the second reinforcing member is provided, thickness (thickness D1, thickness D2) of a side rubber (side rubber 30) provided on the outside in the tire width direction of the carcass is substantially the same as ply thickness combining the body portion and the folded portion formed by a plurality of plies. A thickness (D1, D2) of the side rubber (31) at a maximum width position of tire is 40% or more of a sectional width of the tire side portion (30) at the maximum width position

### [Brief Description of Drawings]

FIG. 1 is a cross-sectional view of a pneumatic tire 10.
FIG 2 is a partial cross-sectional view of the pneumatic tire 10.
FIG. 3 is a partially enlarged sectional view of the pneumatic tire 10.

### [Description of Embodiments]

Embodiments will be described below with reference to the drawings. The same functions and configurations are denoted by the same or similar reference numerals, and description thereof will be omitted as appropriate.

### (1)Overall schematic structure of tire

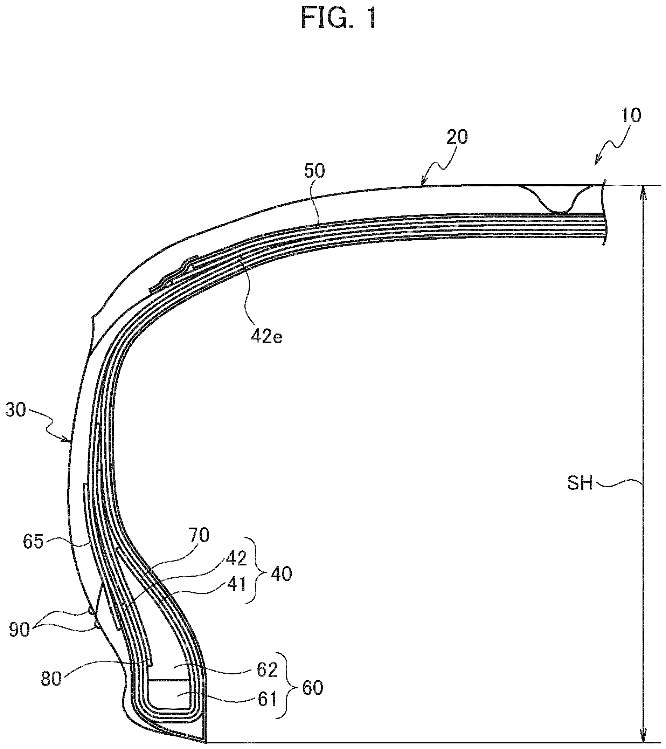

FIG. 1 is a sectional view of the pneumatic tire 10 according to the present embodiment. Specifically, FIG. 1 is a cross-sectional view of the pneumatic tire 10 taken along tire width direction and tire radial direction. In FIG. 1, sectional hatching is not shown.

As shown in FIG. 1, the pneumatic tire 10 includes a tread portion 20, a tire side portion 30, a carcass 40, a belt layer 50, and a bead portion 60.

In the present embodiment, the pneumatic tire 10 is a four-wheel vehicle, specifically, a tire assumed to be mounted on a passenger vehicle. In particular, the pneumatic tire 10 can be suitably used for a four-wheel vehicle such as a sports type vehicle emphasizing cornering performance.

The tread portion 20 is a portion in contact with a road surface. On the tread portion 20, a pattern (not shown) is formed according to the use environment of the pneumatic tire 10 and the type of vehicle to be mounted.

The tire side portion 30 is continuous to the tread portion 20 and is positioned inside in the tire radial direction of the tread portion 20. The tire side portion 30 is an area from the outer edge of the tire width direction of the tread portion 20 to the upper edge of the bead portion 60. The tire side portion 30 is sometimes referred to as a sidewall.

The carcass 40 forms the skeleton (tire skeleton) of the pneumatic tire 10 . In this embodiment, the carcass 40 has a radial structure in which carcass cords (not shown) disposed radially along the tire radial direction are coated with a rubber material. The carcass 40 has a body portion 41 and a folded portion 42.

The body portion 41 extends over the tread portion 20, the tire side portion 30 and the bead portion 60 and the body portion 41 is a portion until it is folded back at the bead portion 60.

The folded portion 42 is a portion continuous to the body portion 41 and folded back to outside in the tire width direction via a bead core 61. The outer end 42 e of the folded portion 42 in the tire radial direction extends to the inside in the tire radial direction of the belt layer 50. That is, the carcass 40 has an envelope structure.

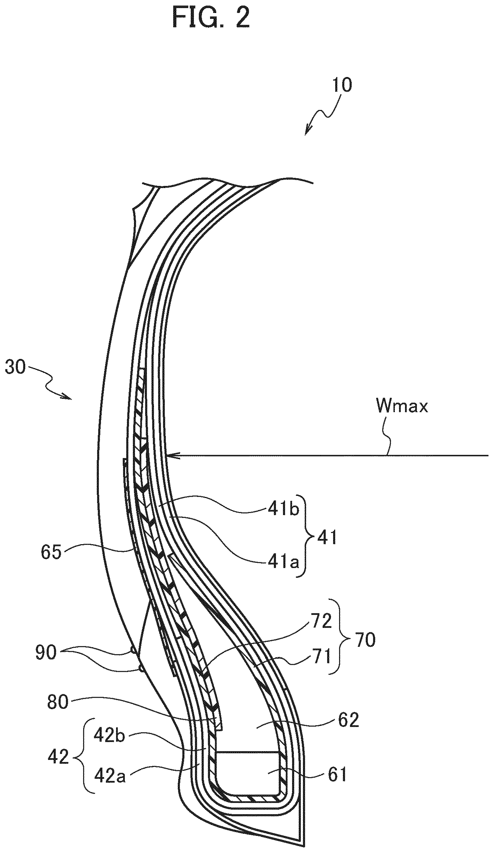

However, the carcass 40 may not necessarily have an envelope structure, and for example, it may also have a high-turn-up structure in which the outer end 42 e does not reach the belt layer 50 but is positioned inside in tire radial direction of the belt layer 50, more specifically, in the vicinity of the maximum width position Wmax (not shown in FIG. 1, see FIG. 2).

The carcass cord is formed of an organic fiber such as nylon as in the case of a tire for standard four-wheel vehicles. In the present embodiment, the carcass 40 is formed of a plurality of plies (carcass plies). The configuration of the carcass 40 will be described later.

The belt layer 50 is provided inside in the tire radial direction of the tread portion 20. In this embodiment, the belt layer 50 includes a pair of crossing belts with crossed steel cords. The belt layer 50 may include a reinforcing belt provided at an end of the crossing belt in the tire width direction.

The bead portion 60 is continuous to the tire side portion 30 and is positioned inside in the tire radial direction of the tire side portion 30. The bead portion 60 is annular extending to the tire circumferential direction and is locked to a rim wheel (not shown).

The bead portion 60 includes a bead core 61 and a bead filler 62.

The bead core 61 is formed by twisting a plurality of metal cords. For example, the bead core 61 may be formed of steel cords. The number of cords (the number of cores) is not particularly limited, but in this embodiment, the number of cores is about 24.

The bead filler 62 is provided outside in the tire radial direction of the bead core 61. The bead filler 62 is formed by using rubber harder than other parts formed by rubber. The bead filler 62 is provided to fill a space having wedge-shaped in cross-sectional shape formed by the body portion 41 and the folded portion 42 of the carcass 40.

In this embodiment, a second bead filler 65 is provided. The second bead filler 65 is provided outside in the tire width direction of the folded portion 42 of the carcass 40. The second bead filler 65 is also formed of the same member as the bead filler 62.

The pneumatic tire 10 also includes a flipper 70 and an insert 80.

The flipper 70 is provided to cover the periphery of the bead portion 60. Specifically, the flipper 70 is folded back from the inside in the tire width direction via the bead core 61 to the outside in the tire width direction to cover the bead core 61 and the bead filler 62.

The flipper 70 has a structure in which a plurality of cords arranged slantingly to the tire radial direction are covered with rubber. An organic fiber such as aramid fiber can be used as the cord.

The flipper 70 reinforces the bead portion 60. In this embodiment, the flipper 70 constitutes the first reinforcing member.

The insert 80 is provided outside in the tire width direction of the bead filler 62. Specifically, the insert 80 is provided between the bead filler 62 and the flipper 70 folded outside in the tire width direction.

The insert 80 is also formed by covering a plurality of cords arranged slantingly to the tire radial direction with rubber. The cord may be an organic fiber such as aramid fibers or a metal such as steel.

The insert 80 reinforces the tire side portion 30 and the bead portion 60. In this embodiment, the insert 80 constitutes the second reinforcing member.

The flipper 70 and the insert 80 may be referred to as a side reinforcing layer or the like.

A rim line 90 is provided on an outer side surface of the bead portion 60 of tire width direction. The rim line 90 is a projection formed along the bead portion 60 to confirm that the tire circumferential direction is correctly mounted on the rim wheel. In this embodiment, the rim line 90 is provided on the outer side in the tire radial direction about 6 mm from the outer end of a rim flange 110.

### (2)Structure of tire side portion 30 and bead portion 60

FIG. 2 is a partial cross-sectional view of the pneumatic tire 10. In FIG. 2, in order to facilitate identification, the cross section hatching is shown only for a part of the components.

As shown in FIG. 2, in this embodiment, the carcass 40 is formed by a plurality of plies (carcass plies). Specifically, the body portion 41 is formed by two plies. A part of the folded portion 42 is formed by 2 plies.

More specifically, the body portion 41 is formed by a ply 41 a and a ply 41 b. The folded portion 42 is formed by a ply 42 a and a ply 42 b. The ply 42 b terminates near the center of the bead filler 62 in the tire radial direction.

The flipper 70 has an inner portion 71 and an outer portion 72. The inner portion 71 is a portion positioned inside the bead portion 60 in the tire width direction. The outer portion 72 is a portion positioned outside the bead portion 60 in the tire width direction.

The tire side portion 30 has the maximum width position Wmax at which tire width of the pneumatic tire 10, that is, the width along the tire width direction, becomes maximum. In the present embodiment, the maximum width position Wmax is a position where the width along the tire width direction in pneumatic tire 10 which is not rim-assembled is maximum .

### (3)Detailed structure of tire side portion 30 and bead portion 60

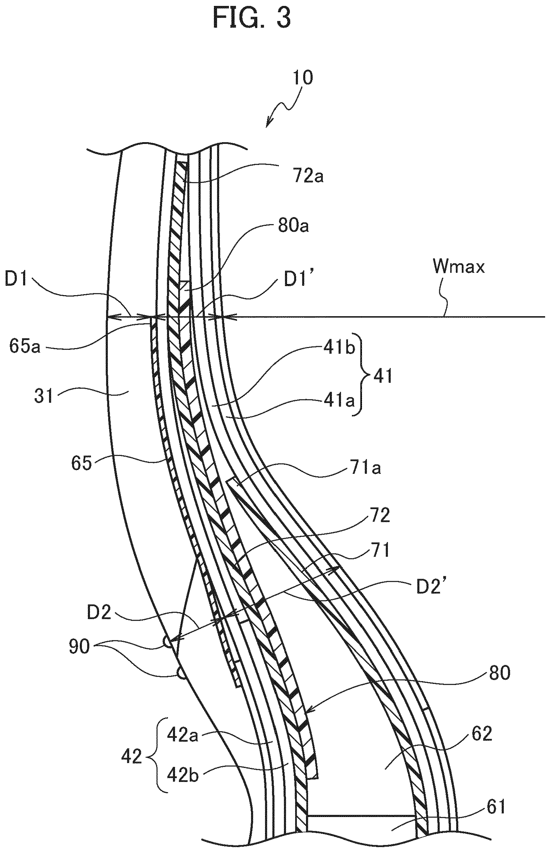

FIG. 3 is a partially enlarged sectional view of the pneumatic tire 10. In FIG. 3, as in FIG. 2, in order to facilitate identification, only a part of the components is displayed with cross section hatching.

As described above, the body portion 41 and the folded portion 42 of the carcass 40 are formed by a plurality of plies, specifically, two plies, but in at least a part of the region where the insert 80 is provided, the thickness of a side rubber 31 provided outside in the tire width direction of the carcass 40 is substantially the same as the ply thickness obtained by combining the body portion 41 and the folded portion 42 formed by a plurality of plies.

Specifically, the thickness D1 of the side rubber 31 is substantially the same as the thickness of the ply 41 a, the ply 41 b, the ply 42 a and the ply 42 b combined. In this embodiment, the ply thicknesses of the ply 41 a, the ply 41 b, the ply 42 a, and the ply 42 b are each about 1 mm. Therefore, the thickness D1 is about 4 mm. By substantially the same it is meant that the thickness D1 is within ± 10% of the total thickness of the plurality of plies.

The thickness D1 is the thickness of the side rubber 31 at the maximum width position Wmax. The thickness D1, that is, the thickness of the side rubber 31 at the maximum width position Wmax, is not less than 40% of the cross-sectional width (D1 + D1 ' in the figure) of tire side portion 30 at the maximum width position Wmax. Note that the section width is the total thickness of tire side portion 30 along a straight line perpendicular to the outer surface of the tire width direction in tire sectional view as shown in FIG. 3.

That is, in the present embodiment, the thickness of the side rubber 31 at the maximum width position Wmax is substantially the same as the thickness of the four plies (ply 41 a, ply 41 b, ply 42 a, and ply 42 b) forming the carcass 40.

In addition, the thickness D2 of the side rubber 31 at the position of the rim line 90 is also substantially the same as the ply thickness obtained by combining the ply 41 a, the ply 41 b, the ply 42 a, and the ply 42 b. The thickness D2 is not less than 30% of the cross-sectional width (D2 + D2 ' in the figure) of the bead portion 60 at the position of the rim line 90.

Note that the section width is the total thickness of the bead portion 60 along a straight line perpendicular to the outer surface of the tire width direction in tire sectional view as shown in FIG. 3. As shown in FIG. 3, a plurality of rim lines 90 may be provided, and in such a case, the rim line 90 provided on the outermost side of the tire radial direction is used as a reference. The thickness D2 does not include a portion of the rim line 90 protruding from the outer surface of the bead portion 60 in the tire width direction.

In this embodiment, the thickness D1 and the thickness D2 do not include the thickness of the second bead filler 65. That is, the thickness D1 (thickness D2) is a distance from the tire width direction outer surface of the second bead filler 65 to the tire width direction outer surface of the folded portion 42 (ply 42 a) of the carcass 40.

The positions of the thickness D1 and the thickness D2 in the tire radial direction are provided with the flipper 70 (outer portion 72) and the insert 80.

Also, an outer end 72 a of an outer portion 72 of the flipper 70 in the tire radial direction is positioned outside of the tire radial direction than an outer end 71 a of an inner portion 71 of the flipper 70 in the tire radial direction. In addition, the outer end 72 a is located outside of the 50% of the section height SH of the pneumatic tire 10 in the tire radial direction.

The section height SH is the height of the pneumatic tire 10 from the inside edge of the bead portion 60 in the tire radial direction to the outside edge of the tread portion 20 in the tire radial direction that is not rim assembled. In this embodiment, the outer end 72 a is provided at 54% of the section height SH. The position of 54% of the section height SH is based on the inner edge of the bead portion 60 in the tire radial direction (hereinafter the same).

The outer end 71 a in the tire radial direction of the inner portion 71 of the flipper 70 is provided at 20% of the section height SH.

An outer end 80 a of the insert 80 in the tire radial direction is positioned inside in the tire radial direction than at 50% of the section height SH. In this embodiment, the outer end 80 a is provided at 46% of the section height SH.

An outer end 65 a of the second bead filler 65 in the tire radial direction is close to the maximum width position Wmax but is positioned inside in the tire radial direction than the maximum width position Wmax.

### (4)Function and effects

According to the embodiment described above, the following effects can be obtained. Specifically, the flipper 70 (first reinforcing member) is provided in the bead portion 60 of the pneumatic tire 10, and the insert 80 (second reinforcing member) is provided between the bead filler 62 and the outer portion 72 of the flipper 70.

In at least a part of the region where the insert 80 is provided, the thickness D1 of the side rubber 31 is substantially the same as the ply thickness obtained by combining the body portion 41 and the folded portion 42 of the carcass 40 formed by the plurality of plies.

The thickness of the side rubber 31 is thicker than a conventional pneumatic tire of the same kind. Specifically, the thickness (thickness D1 and thickness D2) of the rubber is increased from the maximum width position Wmax to the rim line 90. That is, the thickness of the side rubber 31 is increased in at least a part where the flipper 70 and the insert 80 are provided in the tire radial direction.

By increasing the thickness of the side rubber 31 (thicker gauging) and arranging the flipper 70 and the insert 80, the longitudinal spring property and the damping property of the pneumatic tire 10 can be improved without increasing the case rigidity.

More specifically, the thicker gauging of the side rubber 31 improves the longitudinal spring property, and this promotes the shearing deformation of the tire side portion 30 which is relatively more easily deformed than the tread portion 20. Since the shape of the carcass 40 (cross-sectional shape along the tire width direction and the tire radial direction) is hard to deform, the axial force of pneumatic tire 10 during cornering can be improved.

Further, since the damping property of tire (flexibility of tire (carcass 40) in the tire radial direction) during cornering can be optimized by making the thickness gauge of the side rubber 31, the attitude of the vehicle during cornering can be easily maintained.

That is, according to the pneumatic tire 10, the improvement of the axial force during cornering and the ease of maintaining the attitude of the vehicle can be made compatible at a high level. In addition, a high degree of compatibility between the improvement of axial force during cornering and the ease of maintaining the attitude of the vehicle can contribute to the improvement of the controllability in critical condition of tire performance (gripping force, etc.) during cornering.

The case rigidity means rigidity of the carcass 40 itself forming tire skeleton (case).

The thickness of the side rubber 31 at the maximum width position Wmax is 40% or more of the cross-sectional width of the tire side portion 30 at the maximum width position Wmax. The thickness D2 of the side rubber 31 at the position of the rim line 90 is 30% or more of the sectional width of the bead portion 60 at the position of the rim line 90. Therefore, the relative thickness of the side rubber 31 is increased from the tire side portion 30 to the bead portion 60. Thus, the longitudinal spring property and the damping property of the pneumatic tire 10 can be improved more appropriately, and the improvement of the axial force during cornering and the ease of maintaining the attitude of the vehicle can be made compatible in a higher dimension.

In the present embodiment, the thickness of the side rubber 31 at the maximum width position Wmax is substantially the same as the thickness of the four plies (ply 41 a, ply 41 b, ply 42 a, and ply 42 b) forming the carcass 40. Therefore, the longitudinal spring property and the damping property of the pneumatic tire 10 can be more appropriately improved while securing a balance with the case rigidity of the carcass 40. Thus, the improvement of the axial force during cornering and the ease of maintaining the attitude of the vehicle can be made compatible in a higher dimension.

In this embodiment, the outer end 72 a of the outer portion 72 of the flipper 70 in the tire radial direction is positioned outside in the tire radial direction than the outer end 71 a in the tire radial direction of the inner portion 71 of the 70 flipper.

Also, the outer end 80 a of the insert 80 in the tire radial direction is positioned inside in the tire radial direction than at 50% of the section height SH. Further, the outer end 65 a of the second bead filler 65 in the tire radial direction is close to the maximum width position Wmax but is located inside in the tire radial direction than the maximum width position Wmax.

Thus, over a wide range of the tire side portion 30 in the tire radial direction, characteristics may be imparted to the tire side portion 30 that contribute to appropriate improvements in longitudinal spring property and damping property of the pneumatic tire 10. Thus, the improvement of the axial force during cornering and the ease of maintaining the attitude of the vehicle can be made compatible in a higher dimension.

### (5)Other embodiments

Although the contents of the present invention have been described above with reference to the examples, it will be obvious to those skilled in the art that the present invention is not limited to these descriptions and that various modifications and improvements are possible as claimed.

For example, although the second bead filler 65 is provided in the above-described embodiment, the second bead filler 65 may not necessarily be provided. In this case, the thickness D1 (thickness D2) of the side rubber 31 is a distance from the tire width direction outer surface of the tire side portion 30 (bead portion 60) to the tire width direction outer surface of the folded portion 42 (ply 42 a) of the carcass 40.

In the embodiment described above, the outer end 80 a of the insert 80 in the tire radial direction is positioned inside in the tire radial direction than at 50% of the section height SH, and the outer end 65 a in the tire radial direction of the second bead filler 65 is positioned inside the maximum width position Wmax while approaching the maximum width position Wmax, but such a positional relationship is not required.

In the embodiment described above, the outer end 72 a of the outer portion 72 of the flipper 70 in the tire radial direction is positioned outside in the tire radial direction than the outer end 71 a of the inner portion 71 of the flipper 70 in the tire radial direction, but such a positional relationship is not required.

### [Reference Signs List]

10 Pneumatic tire
20 Tread portion
30 Tire side portion
31 Side rubber
40 Carcass
41 Body portion
41 a Ply
41 b Ply
42 Folded portion
42 a Ply
42 b Ply
42 e Outer end
50 Belt layer
60 Bead portion
61 Bead core
62 Bead filler
65 Second bead filler
65 a Outer end
70 Flipper
71 Inner portion
71 a Outer end
72 Outer portion
72 a Outer end
80 Insert
80 a Outer end
90 Rim line

## Claims

1. A tire (10) comprising:
a tread portion (20) for contacting with a road surface;
a tire side portion (30) continuous to the tread portion (20) and positioned inside in a tire radial direction of the tread portion (20);
a bead portion (60) continuous to the tire side portion (30) and positioned inside in the tire radial direction of the tire side portion (30); and
a carcass (40) that forms a tire skeleton, wherein
the bead portion (60) includes a bead core (61) and a bead filler (62) provided outside in the tire radial direction of the bead core (61);
the carcass (40) includes a body portion (41) and a folded portion (42) continuous to the body portion (41) and folded back to outside in a tire width direction via the bead core (61), and
a part of the body portion (41) and the folded portion (42) are formed by at least a plurality of plies (41a, 41b, 42a, 42b), wherein
the carcass comprises:
a first reinforcing member (70) folded back from an inner side in the tire width direction via the bead core (61) to an outer side in the tire width direction to cover the bead core (61) and the bead filler (62); and
a second reinforcing member (80) provided between the bead filler (62) and the first reinforcing member (70) folded outside in the tire width direction, wherein
in at least a part of the region where the second reinforcing member (80) is provided, a thickness of a side rubber (31) provided on the outside in the tire width direction of the carcass (40) is substantially the same as a ply thickness combining the body portion (41) and the folded portion (42) formed by the plurality of plies (41a, 42b, 42a, 42b);
wherein a thickness (D1, D2) of the side rubber (31) at a maximum width position of tire is 40% or more of a sectional width of the tire side portion (30) at the maximum width position.

2. The tire according to claim 1, wherein a thickness of the side rubber (31) at a position of a rim line (90) of the tire (10) is 30% or more of a sectional width of the bead portion (60) at the position of the rim line (90).

3. The tire according to claims 1 or 2, wherein the thickness (D1, D2) of the side rubber (31) at the maximum width position of the tire (10) is substantially the same as thickness of four sheets of the ply.

4. The tire (10) according to any one of claims 1 to 3, wherein
the first reinforcing member (70) includes:
an inner portion (71) positioned inside in the tire width direction of the bead portion; and
an outer portion (72) positioned outside in the tire width direction of the bead portion (60), wherein
an outer end (72a) in the tire radial direction of the outer portion (72) is positioned outside of the inner portion (71) in the tire radial direction and is positioned outside in the tire radial direction of a position of a 50% of section height.

5. The tire (10) according to claim 4, wherein an outer end (80a) in the tire radial direction of the second reinforcement member (80) is positioned inside in the tire radial direction of the 50% of the section height.

## Patentansprüche

1. Reifen (10), der Folgendes umfasst:
einen Laufflächenabschnitt (20) zum Berühren mit einer Straßenoberfläche,
einen Reifenseitenabschnitt (30), der mit dem Laufflächenabschnitt (20) zusammenhängend und in einer Reifenradialrichtung von dem Laufflächenabschnitt (20) nach innen angeordnet ist,
einen Wulstabschnitt (60), der mit dem Reifenseitenabschnitt (30) zusammenhängend und in der Reifenradialrichtung von dem Reifenseitenabschnitt (30) nach innen angeordnet ist, und
eine Karkasse (40), die ein Reifenskelett bildet, wobei
der Wulstabschnitt (60) einen Wulstkern (61) und einen Kernreiter (62), der in der Reifenradialrichtung von dem Wulstkern (61) nach außen bereitgestellt wird, einschließt,
die Karkasse (40) einen Körperabschnitt (41) und einen gefalteten Abschnitt (42), der mit dem Körperabschnitt (41) zusammenhängend und über den Wulstkern (61) in einer Reifenbreitenrichtung zur Außenseite zurückgefaltet ist, einschließt und
ein Teil des Körperabschnitts (41) und der gefaltete Abschnitt (42) durch mindestens eine Vielzahl von Lagen (41a, 41b, 42a, 42b) gebildet werden, wobei
die Karkasse Folgendes umfasst:
ein erstes Verstärkungselement (70), das von einer in der Reifenbreitenrichtung inneren Seite über den Wulstkern (61) zu einer in der Reifenbreitenrichtung äußeren Seite zurückgefaltet ist, um den Wulstkern (61) und den Kernreiter (62) abzudecken, und
ein zweites Verstärkungselement (80), das zwischen dem Kernreiter (62) und dem ersten Verstärkungselement (70) bereitgestellt wird, in der Reifenbreitenrichtung nach außen gefaltet, wobei
in mindestens einem Teil des Bereichs, wo das zweite Verstärkungselement (80) bereitgestellt wird, eine Dicke eines Seitengummis (31), der auf der Außenseite in der Reifenbreitenrichtung der Karkasse (40) bereitgestellt wird, im Wesentlichen dieselbe ist wie eine Lagendicke, die den Körperabschnitt (41) und den gefalteten Abschnitt (42) kombiniert, die durch die Vielzahl von Lagen (41a, 42b, 42a, 42b) gebildet werden,
wobei eine Dicke (D1, D2) des Seitengummis (31) bei einer Position maximaler Breite des Reifens 40 % oder mehr von einer Querschnittsbreite des Reifenseitenabschnitts (30) bei der Position maximaler Breite beträgt.

2. Reifen nach Anspruch 1, wobei eine Dicke des Seitengummis (31) bei einer Position einer Felgenlinie (90) des Reifens (10) 30 % oder mehr von einer Querschnittsbreite des Wulstabschnitts (60) bei der Position der Felgenlinie (90) beträgt.

3. Reifen nach Anspruch 1 oder 2, wobei die Dicke (D1, D2) des Seitengummis (31) bei der Position maximaler Breite des Reifens (10) im Wesentlichen dieselbe ist wie die Dicke von vier Bahnen der Lage.

4. Reifen (10) nach einem der Ansprüche 1 bis 3, wobei
das erste Verstärkungselement (70) Folgendes einschließt:
einen inneren Abschnitt (71), der in der Reifenbreitenrichtung von dem Wulstabschnitt nach innen angeordnet ist,
einen äußeren Abschnitt (72), der in der Reifenbreitenrichtung von dem Wulstabschnitt (60) nach außen angeordnet ist, wobei
ein in der Reifenradialrichtung äußeres Ende (72a) des äußeren Abschnitts (72) in der Reifenradialrichtung außerhalb des inneren Abschnitts (71) angeordnet ist und in der Reifenradialrichtung außerhalb einer Position von 50 % einer Querschnittshöhe angeordnet ist.

5. Reifen (10) nach Anspruch 4, wobei ein in der Reifenradialrichtung äußeres Ende (80a) des zweiten Verstärkungselements (80) in der Reifenradialrichtung innerhalb der 50 % der Querschnittshöhe angeordnet ist.

## Revendications

1. Pneumatique (10), comprenant :
une partie de bande de roulement (20) destinée à entrer en contact avec une surface de route ;
une partie latérale de pneumatique (30) continue par rapport à la partie de bande de roulement (20) et positionnée à l'intérieur, dans une direction radiale du pneumatique, de la partie de bande de roulement (20) ;
une partie de talon (60) continue par rapport à la partie latérale de pneumatique (30) et positionnée à l'intérieur, dans la direction radiale du pneumatique, de la partie latérale de pneumatique (30) ; et
une carcasse (40) qui forme un squelette du pneumatique ; dans lequel
la partie de talon (60) inclut une tringle (61) et un bourrage sur tringle (62), fourni à l'extérieur, dans la direction radiale du pneumatique, de la tringle (61) ;
la carcasse (40) inclut une partie de corps (41) et une partie pliée (42) continue par rapport à la partie de corps (41), et repliée vers l'extérieur dans une direction de la largeur du pneumatique, via la tringle (61) ; et
une partie de la partie de corps (41) et la partie pliée (42) sont formées par au moins une pluralité de nappes (41a, 41b, 42a, 42b) ; dans lequel
la carcasse comprend :
un premier élément de renforcement (70) replié vers l'arrière, depuis un côté interne dans la direction de la largeur du pneumatique, via la tringle (61), vers un côté externe dans la direction de la largeur du pneumatique, pour recouvrir la tringle (61) et le bourrage sur tringle (62) ; et
un deuxième élément de renforcement (80) fourni entre le bourrage sur tringle (62) et le premier élément de renforcement (70), plié vers l'extérieur, dans la direction de la largeur du pneumatique ; dans lequel
dans au moins une partie de la région où est fourni le deuxième élément de renforcement (80), une épaisseur d'une gomme latérale (31), fournie sur l'extérieur, dans la direction de la largeur du pneumatique, de la carcasse (40), est sensiblement égale à une épaisseur de nappe combinant la partie de corps (41) et la partie pliée (42) formées par la pluralité de nappes (41a, 42b, 42a, 42b) ;
dans lequel une épaisseur (D1, D2) de la gomme latérale (31) au niveau d'une position à largeur maximale du pneumatique représente 40 % ou plus d'une largeur de section transversale de la partie latérale de pneumatique (30) au niveau de la position à largeur maximale.

2. Pneumatique selon la revendication 1, dans lequel une épaisseur de la gomme latérale (31) au niveau d'une position d'une ligne de jante (90) du pneumatique (10) représente 30 % ou plus d'une largeur de section transversale de la partie de talon (60), au niveau de la position de la ligne de jante (90).

3. Pneumatique selon la revendication 1 ou 2, dans lequel l'épaisseur (D1, D2) de la gomme latérale (31), au niveau de la position à largeur maximale du pneumatique (10), est sensiblement égale à l'épaisseur de quatre feuilles de la nappe.

4. Pneumatique (10) selon l'une quelconque des revendications 1 à 3, dans lequel :
le premier élément de renforcement (70) inclut :
une partie interne (71) positionnée à l'intérieur, dans la direction de la largeur du pneumatique, de la partie de talon ; et
une partie externe (72) positionnée à l'extérieur, dans la direction de la largeur du pneumatique, de la partie de talon (60) ; dans lequel
une extrémité externe (72a) dans la direction radiale de la partie externe (72) est positionnée à l'extérieur de la partie interne (71) dans la direction radiale du pneumatique, et est positionnée à l'extérieur, dans la direction radiale du pneumatique, d'une position correspondant à 50 % d'une hauteur de section transversale.

5. Pneumatique (10) selon la revendication 4, dans lequel une extrémité externe (80a), dans la direction radiale du pneumatique, du deuxième élément de renforcement (80) est positionnée à l'intérieur, dans la direction radiale du pneumatique, des 50 % de la hauteur de section transversale.
